# EUROPEAN PATENT APPLICATION

(11) **EP 1 460 821 A2**
(43) Date of publication of application: **22.09.2004**
(21) Application number: 04006887.6
(22) Date of filing: 22.03.2004
(51) Int. Cl.: H04M 1/23, H01H 13/70

(54) **Key input device for portable communication terminal**

(30) Priority: 21.03.2003 KR 2003017692
(71) Applicant: Samsung Electronics Co., Ltd., Suwon-city, Gyeonggi-do (KR)
(72) Inventor: Park, In-gon, Samsung Electronics Co., Ltd., Suwon-si, Gyeonggi-do (KR); Lee, Chang-Soo, Samsung Electronics Co., Ltd., Suwon-si, Gyeonggi-do (KR); Park, Seung-Min, Samsung Electronics Co., Ltd., Suwon-si, Gyeonggi-do (KR); Hyun,Sang-Min, Samsung Electronics Co., Ltd., Suwon-si, Gyeonggi-do (KR); Lee, Ji-Young, Samsung Electronics Co., Ltd., Suwon-si, Gyeonggi-do (KR); Kim, Sung-Kwon, Samsung Electronics Co., Ltd., Suwon-si, Gyeonggi-do (KR); Im, Jung-Hyeok, Samsung Electronics Co., Ltd., Suwon-si, Gyeonggi-do (KR)
(74) Representative: Grünecker, Kinkeldey, Stockmair & Schwanhäusser Anwaltssozietät

(57) **Abstract**

Disclosed herein is a key input device of a portable communication terminal having eight keys arranged in a 2×4 array, instead of the existing conventional twelve keys arranged in a 3×4 array. The key input device includes a printed circuit board in a body of the terminal and a dome switch plate between the printed circuit board and one or more linear key arrays. Each linear key array is provided with integrally connected first and second key regions having respective outer ends mounted at an outer rim of the body. A boundary portion is provided between the first and second key regions. In one embodiment protrusions are formed between the key array and the dome switch plate, between adjacent dome switches, causing the first or second key regions to move in a seesaw manner when the respective ends are pressed down by an external force.

## Description

### PRIORITY

This application claims priority to an application entitled "KEY INPUT DEVICE FOR PORTABLE COMMUNICATION TERMINAL", filed in the Korean Intellectual Property Office on March 21, 2003 and assigned Serial No. 2003-17692, the contents of which are hereby incorporated by reference.

### BACKGROUND OF THE INVENTION

### 1. Field of the Invention

The present invention relates to a key input device for a portable communication terminal, and more particularly to a key input device for a portable communication terminal, which is comprised of eight keys arranged in a 2×4 array, instead of the existing conventional twelve keys arranged in a 3×4 array.

### 2. Description of the Related Art

Generally, the term "portable communication devices" means devices that are portable and enable owners of the devices to communicate in a wireless way. Such portable communication devices generally include a hand held programming ("HHP") device, a second generation cordless ("CT-2") phone, a digital phone, a personal communication system ("PCS") phone, a personal digital assistant ("PDA"), etc. On the basis of their construction, for example, portable communication devices may be classified as a bar-type wireless communication terminal, a flip-type wireless communication terminal, or a folder-type wireless communication terminal. The bar-type wireless communication terminal has a single housing, the flip-type wireless communication terminal comprises a bar-type housing and a flip part pivotably attached to the housing, and the folder-type wireless communication terminal comprises a bar-type housing and a folder part pivotably attached to the housing. Each of the aforesaid conventional wireless communication terminals essentially includes an antenna, data input/output units, and data transmitter/receiver units. Usually, the data input unit is a keypad that is pressed down by a user's fingers to input data. Alternatively, a touch pad or a touch screen may be used.

Generally, portable communication terminals are diversified in functions thereof to satisfy the customer's requirements, in contrast with a reduction in size. By using portable communication terminals, for example, it is possible to perform voice communication, listen to the radio and download MP3 music by accessing the Internet. In addition, by operating a key input device of the portable communication terminal, it is possible to transmit/receive text messages.

The keypad, which is used to input data, is basically made up of an array of keys. The keys include, for example, a send key (SND), which is a communication start key, a cancel key, a clear key (CLR), numeric keys, letter keys, an end key (END), functional keys, and a power on/off key (PWR).

Usually, the array of the keys comprises fifteen to twenty keys appropriately positioned at an upper surface of a housing of the portable communication terminal. The keys are exposed to a user of the terminal from the upper surface, thereof, for pressing down by fingers of the user to input desired data.

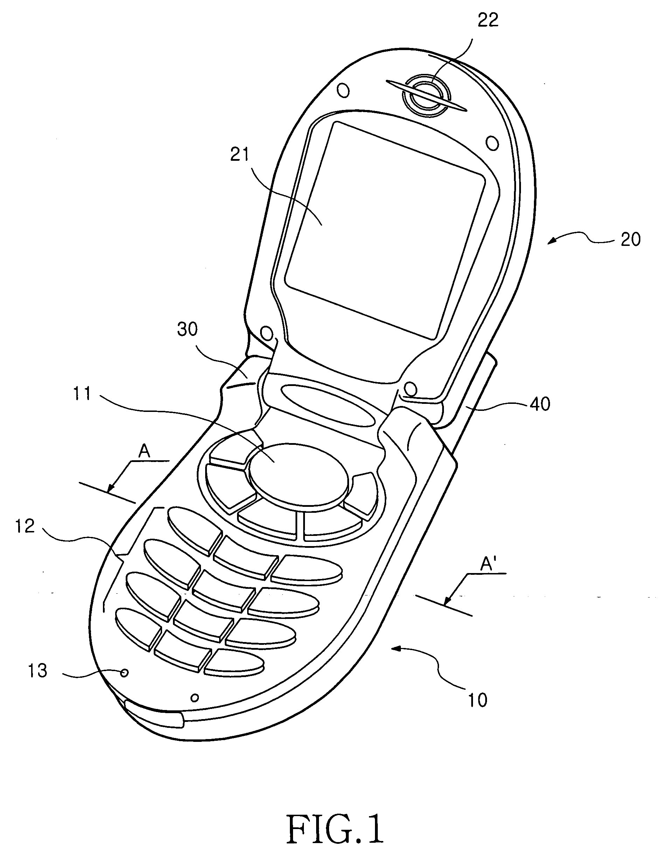

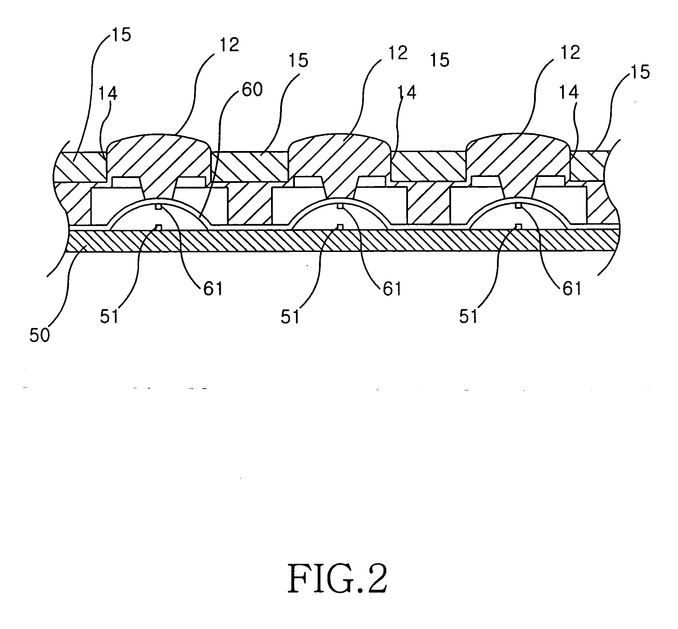

Now, the configuration of the portable communication terminal having the array of the keys will be explained. As shown in Figs. 1 and 2, the conventional folder-type portable communication terminal comprises a body 10 and a folder 20. The body 10 is mounted with numeric keys 12, a quadri-directional adjustment key 11, and a microphone 13. The folder 20 is provided with a liquid crystal display unit 21 and a speaker 22. In order to allow the folder 20 to pivotably move relative to the body 10 so as to be opened away from or closed to the body 10, a hinge mechanism 30 is provided between the body 10 and the folder 20. The body 10 is further mounted with an antenna 40 at a certain position on the upper end thereof.

The numeric keys 12 are arranged in a matrix key array structure. Such a matrix key array structure is made up of the twelve independent keys 12 arranged in a 3×4 array, and the quadri-directional adjustment key 11, and other functional keys.

Referring to Fig. 2, the body 10 is formed at the upper surface thereof with a plurality of perforated holes 14 for allowing the twelve keys 12 and quadri-directional adjustment key 11 to be inserted and coupled therein, respectively.

The respective perforated holes 14 are separated from one another by partitions 15 to define certain receiving spaces therebetween for independently receiving the twelve keys 12 arranged in the 3×4 array.

The conventional portable communication terminal includes a plurality of dome switches 60 so as to allow the user to obtain tactile feedback when the user pushes the keys 12. The dome switches 60 are provided on a dome switch plate mounted at a printed circuit board (PCB) 50 in the body 10. Each of the dome switches 60 comprises a contact 61, which is adapted to come into contact with one of contacts 51 provided on the printed circuit board 50, thereby generating contact signals.

As shown in Fig. 2, the dome switches 60 are provided at the printed circuit board 50, thereby serving to output contact signals whenever the keys 12 are pressed down by the user's fingers.

Above the dome switches 60, the keys 12 and quadri-directional adjustment key 11 are positioned. The quadri-directional adjustment key 11 is divided into upper and lower, and left and right sections capable of performing various functions.

As stated above, since the conventional portable wireless terminal provides an excessive number of independent keys, e.g. at least twelve independent keys 12 that are exposed to the user and the quadri-directional adjustment key 11, there is a problem in that external design options of products are limited, resulting in deterioration in appearance thereof.

### SUMMARY OF THE INVENTION

Therefore, the present invention has been made in view of the above problem, and it is an object of the present invention to provide a key input device for a portable communication terminal, which is comprised of eight keys arranged in a 2×4 array, instead of the existing conventional twelve keys arranged in a 3×4 array, thereby improving an external design of products.

In accordance with one aspect of the present invention, the above and other objects can be accomplished by the provision of a key input device for a portable communication terminal having a printed circuit board provided in a body of the terminal, a dome switch plate mounted at an upper surface of the printed circuit board, and one or more keys located above the dome switch plate, comprising: one or more linear key arrays, each key array being provided with first and second key regions, which are exposed to the outside and connected to each other, respective outer ends of the first and second key regions being mounted near an outer rim of the body of the terminal; a plurality of dome switches formed on the dome switch plate under the linear key arrays, the dome switches being arranged, respectively, under a boundary portion between the-first and second key regions of the respective key arrays, under the first key region of the respective key arrays near its outer end, and under the second key region of the respective key arrays near its outer end, the respective outer ends of the first and second key regions being spaced away from each other at opposite sides of the boundary portion; and at least one protrusion formed between a lower surface of the respective key arrays and the dome switch plate and between adjacent ones of the dome switches, thereby causing the first and second key regions to be biased upwardly or downwardly in a seesaw manner about their central axes when the respective ends of the first and second key regions are pressed down by an external force.

In accordance with another aspect of the present invention, there is provided a key input device for a portable communication terminal having a printed circuit board provided in a body of the terminal, a dome switch plate mounted on an upper surface of the printed circuit board, and one or more keys located above the dome switch plate, comprising: one or more linear key arrays, each key array being provided with first and second key regions, which are exposed to a user and connected to each other, the first and second key regions being curved when their respective outer and inner ends are pressed down, the respective outer ends of the first and second key regions being mounted near an outer rim of the body of the terminal; and dome switches formed on the dome switch plate under the linear key arrays, the dome switches being arranged under a boundary portion between the first and second key regions of the respective key arrays, under the first key region of the respective key arrays near its outer end, and under the second key region of the respective key arrays near its outer end, the respective outer ends of the first and second key regions being spaced away from each other at opposite sides of the boundary portion.

### BRIEF DESCRIPTION OF THE DRAWINGS

The above and other objects, features and advantages of the present invention will be more clearly understood from the following detailed description taken in conjunction with the accompanying drawings, in which:
Fig. 1 is a perspective view illustrating a folder-type portable communication device of the prior art, in a state wherein a folder thereof is opened;
Fig. 2 is a sectional view taken along a line A-A' shown in Fig. 1;
Fig. 3 is a front view illustrating a key input device for a portable communication device in accordance with one embodiment of the present invention;
Fig. 4 is a sectional view taken along a line B-B' shown in Fig. 3;
Fig. 5 is a sectional view taken along the line B-B' shown in Fig. 3, illustrating a state wherein a center portion of the key input device for the portable communication device is pressed down;
Fig. 6 is an enlarged sectional view illustrating a circular portion A shown in Fig. 5;
Fig. 7 is a sectional view taken along the line B-B' shown in Fig. 3, illustrating a state wherein both end portions of the key input device for the portable communication device are pressed down;
Fig. 8 is a sectional view along line B-B' of Fig. 3 illustrating a key input device for the portable communication device in accordance with another embodiment of the present invention, in a state wherein a center portion of the key input device is pressed down; and
Fig. 9 is a sectional view along line B-B' of Fig. 3 illustrating a state wherein both end portions of the key input device of the portable communication device in accordance with another embodiment of the present invention are pressed down.

### DETAILED DESCRIPTION OF THE PREFERRED EMBODIMENTS

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein is omitted to avoid making the subject matter of the present invention unclear. Also, the terms used in the following description are terms defined taking into consideration the functions obtained in accordance with the present invention based on the whole content of this specification.

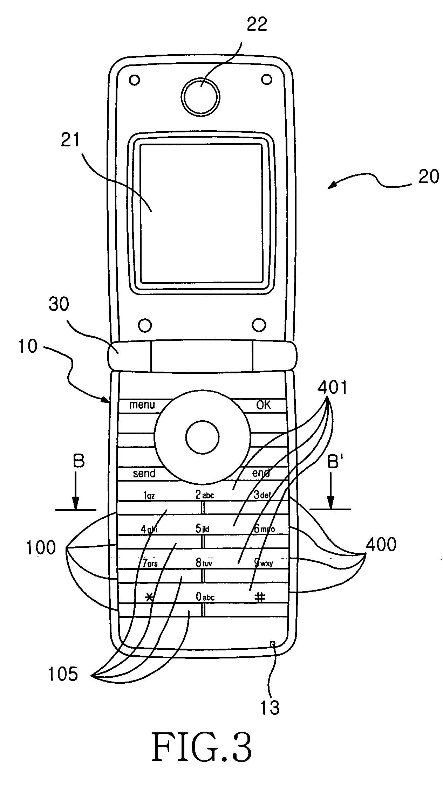

As shown in Figs. 3 to 7, illustrating a key input device for a portable communication terminal in accordance with one embodiment of the present invention, the portable communication terminal comprises a printed circuit board 50 having a circuit, which is installed in a body 10 of the terminal. The printed circuit board 50 is provided at the upper surface thereof with a dome switch plate 200. The dome switch plate 200 is formed with a plurality of dome switches 202, which are adapted to output contact signals whenever they are pressed down due to an external force applied by the user. Above the dome switches 202, one or more keys are provided so as to come into contact with the associated dome switches 202 when they are pressed down by fingers of the user. The body 10 is provided with one or more linear key arrays 100. Each linear key array 100 comprises a first key region 101 and a second key region 102, which are exposed to the user, and are preferably integrally connected to each other.

Respective outer ends 101 a and 102a of the first and second key regions 101 and 102 are mounted at or near an outer rim of the body 10. The key array 100 further comprises a boundary portion 103 provided between the first key region 101 and the second key region 102. The boundary portion 103 of the first and second key regions 101 and 102 is configured to vertically move, i.e. move toward or away from an associated dome switch 202, by receiving the external force applied by the user, thereby coming into contact with and vertically moving the associated dome switches 202 located thereunder. In the same manner, the respective outer ends 101 a and 102a of the first and second key regions 101 and 102 are configured to vertically move by receiving a similar external force, thereby coming into contact with and vertically moving the associated dome switches 202 located thereunder.

The respective outer ends 101a and 102a of the first and second key regions 101 and 102 are spaced away from each other at opposite sides of the linear key array 100, and at opposite sides of the boundary portion 103. In this embodiment, the key array 100 is provided at its lower surface with one or more protrusions 104. The protrusions 104 vertically extend between the lower surface of the respective key regions 101 and 102 arrays 100 and the dome switch plate 200 and between adjacent ones of the dome switches 202 associated with the linear key array 100. The protrusions 104 provide a central axis for each of the first and second key regions 101 and 102, and serve to allow the key regions 101 and 102 to be biased upwardly or downwardly in a seesaw manner about the central axes when outer end 101a or 102a of the first and second key regions 101 and 102 or the boundary portion 103 are pressed down by the external force. In order to allow such seesaw movement of the first and second key regions 101 and 102 of the key array 100, the boundary portion 103 between the first and second key regions 101 and 102 of the respective key arrays 100 is preferably formed with a groove 300 having a certain depth.

Four key arrays 100 are preferably provided, comprising eight key regions arranged in a 2 × 4 array, instead of the existing conventional twelve keys arranged in a 3×4 array. Between adjacent ones of the respective key arrays 100, support frames 400 are provided to separate the key arrays 100 from one another. The support frames 400 have a rectilinear shape, respectively, extending perpendicular to a longitudinal central axis of the body 10.

The respective key arrays 100 may be provided at the upper surface thereof with a printed surface 105 so that various numerals and letters are printed thereon for identification of functions of the respective key arrays 100. The respective support frames 400 may also be provided at the upper surface thereof with a printed surface 401 so that various numerals and letters are printed thereon for identification of functions of the respective key array 100. The key arrays 100 are preferably made of a hard material.

Now, the operation of the key input device for the portable communication terminal in accordance with a preferred embodiment of the present invention will be explained in detail with reference to Figs. 3 to 7.

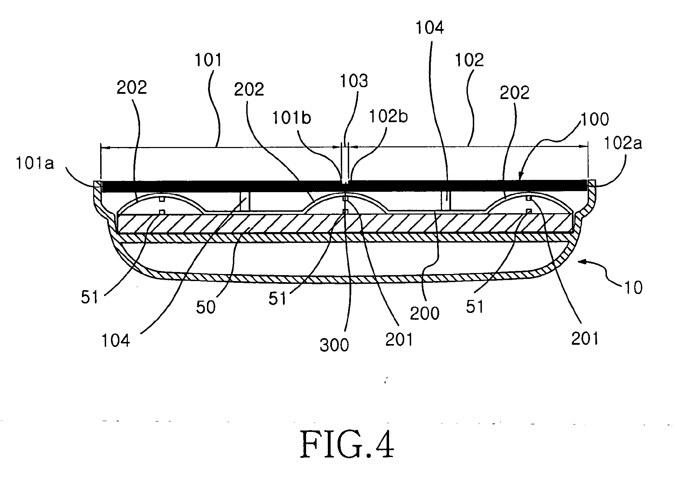

As shown in Figs. 3 and 4, the printed circuit board 50, provided in the body 10 of the portable communication terminal, is mounted at the upper surface thereof with the dome switch plate 200, and the dome switch plate 200 is formed with the plural dome switches 202. The key input device comprises one or more linear key arrays 100 positioned above the dome switches 202.

Each of the key arrays 100 comprises the first and second key regions 101 and 102, which are exposed to the user of the terminal. The first and second key regions 101 and 102 are preferably integrally connected to each other, although they may be connected by other means, such as adhesive strips at the boundary portion between the two key regions, a hook connection at the boundary portion, and the like.

The respective outer ends 10a and 102a of the first and second key regions 101 and 102 are mounted near the outer rim of the body 10.

The respective key arrays 100 further comprise the boundary portion 103 positioned between the first and second key regions 101 and 102. The dome switches 202 are arranged under the boundary portion 103 between the first and second key regions 101 and 102 of the respective key arrays 100, and under the respective outer ends 101a and 102a of the first and second key regions 101 and 102.

The first and second key regions 101 and 102 of each of the four linear key arrays 100 are preferably arranged to form a 2 × 4 array along a longitudinal direction of the body 10.

The respective support frames 400 are provided at the upper surface thereof with the printed surface 401. The respective printed surfaces 401 are printed with various numerals and letters, for identification of functions of the respective key arrays 100, at positions corresponding to the boundary portion 103 between the first and second key regions 101 and 102, and to the respective outer ends 101 a and 102a.

In use, the user selects a key of the linear key arrays 100, and then presses the selected key with his/her finger.

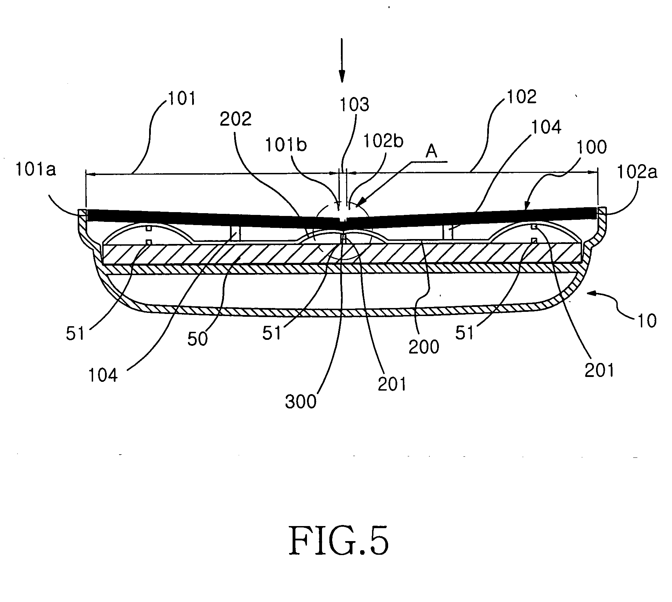

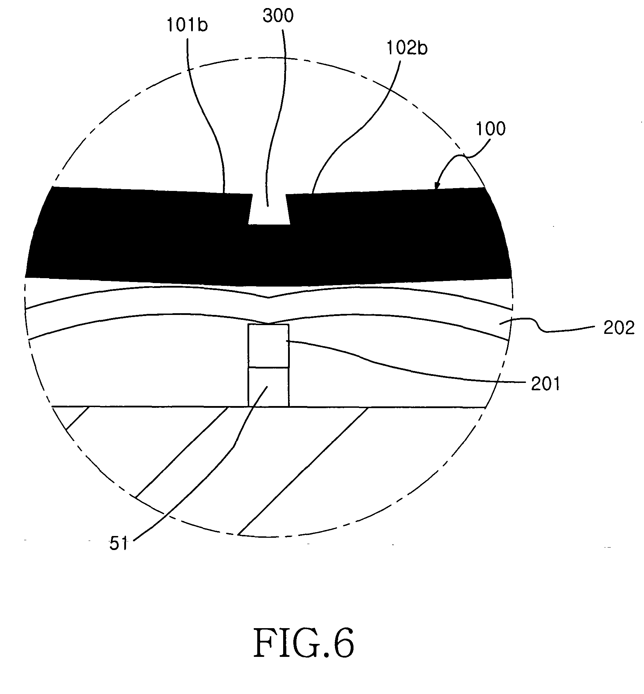

As shown in Figs. 5 and 6, one or more protrusions 104 are provided between the lower surface of the respective key arrays 100 and the dome switch plate 200, thereby serving to allow the respective key arrays 100 to be biased upwardly or downwardly, so that the first and second key regions 101 and 102 move in a seesaw manner about the central axis thereof when the respective inner ends 101b and 102b of the first and second key regions 101 and 102 are pressed down by the external force, as shown in Fig. 5. Due to the protrusions 104, in a state wherein the boundary portion 103 located at respective inner ends 101b band 102b of the first and second key regions 101 and 102 of the respective key arrays 100 is moved downwardly, the respective outer ends 101a and 102a of the first and second key regions 101 and 102 are moved upwardly.

According to the downward movement as stated above, the key arrays 100 come into close contact with the dome switches 202 located under the first and second key regions 101 and 102 thereof. In this state, a contact 201 provided in the respective dome switch 202 comes into electrical contact with the contact 51 provided at the printed circuit board 50.

As shown in Fig. 6, since the boundary portion 103 between the first and second key regions 101 and 102 is formed with the groove 300 having the certain depth, if the respective center portions of the first and second key regions 101 and 102 are pressed down, the respective inner ends 101 band 102b positioned at the boundary portion 103 are moved downwardly, thus being bent closer to each other.

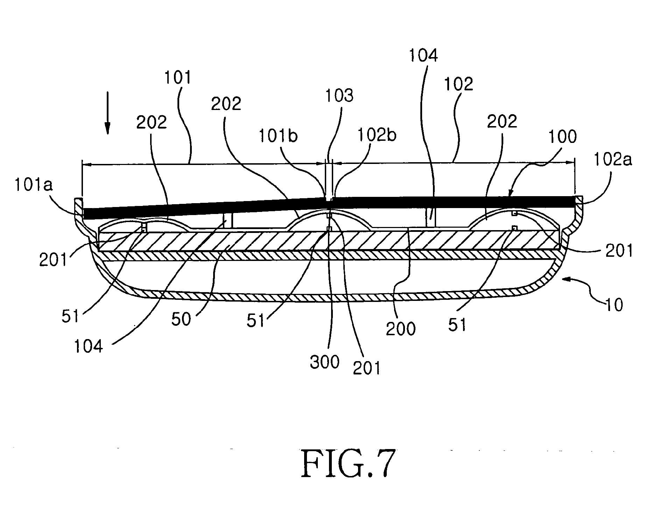

As shown in Fig. 7, if the respective outer ends 101a and 102a of the first and second key regions 101 and 102 are pressed down, the first and second key regions 101 and 102 are biased upwardly or downwardly in a seesaw manner about the axes formed by the protrusions 104 formed at the lower surfaces of the first and second key regions 101 and 102. As a result, the respective outer ends 101a and 102a of the first and second key regions 101 and 102 are moved downwardly, thereby coming into contact with the dome switches 202 provided under the first and second key regions 101 and 102. In this way, the contacts 201 of the pressed dome switches 202 come into electrical contact with the contacts 51 of the printed circuit board 50, respectively.

When either respective outer end 101 a or 102a of the first or second key regions 101 or 102 is pressed down, the first and second key regions 101 or 102 are biased upwardly or downwardly in a seesaw manner about the axes formed by the respective protrusion 104, thereby causing the center portion of the first or second key regions 101 or 102 to move upwardly. In this state, the first and second key regions 101 and 102 do not come into contact with the dome switches 202 provided under the boundary portion 103 between the first and second key regions 101 and 102.

The key arrays 100 are preferably made of a hard or rigid material to enable the seesaw movement thereof.

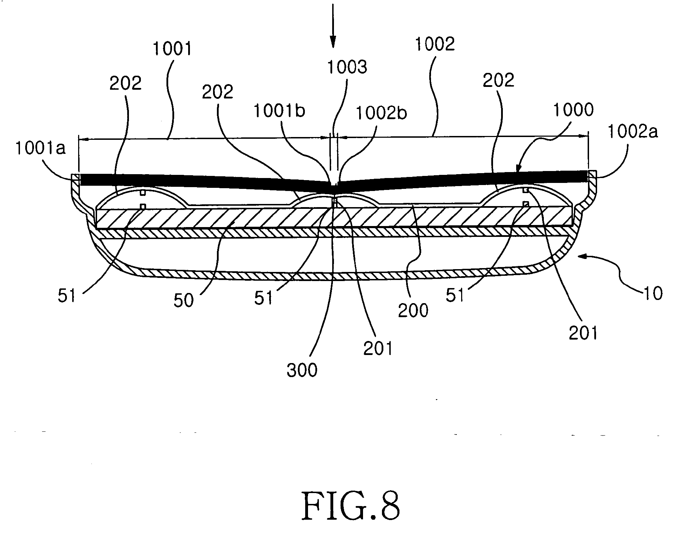

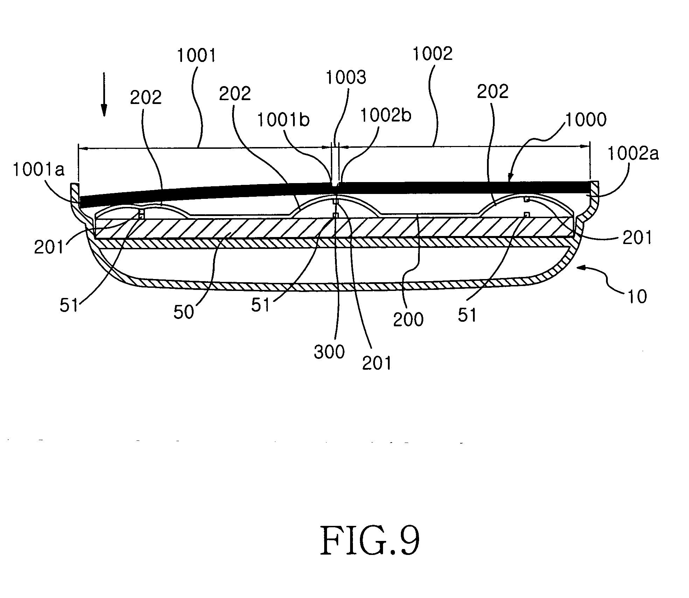

Now, a key input device according to another preferred embodiment of the present invention will be explained with reference to Figs. 8 and 9. As shown in Figs. 8 and 9, the key input device comprises linear key arrays 1000 provided, respectively, with first and second key regions 1001 and 1002, which are exposed to the user.

The first and second key regions 1001 and 1002 are preferably integrally connected to each other.

In use, the user selects a key of the linear key arrays 1000, and then presses the selected key with his/her finger.

In the example shown in Fig. 8, as the selected key of the key array 1000 is pressed down, a boundary portion 1003 between the first and second key regions 1001 and 1002 of the key array 1000 is moved downwardly.

In this case of the present embodiment, the key arrays 1000 are preferably made of a soft or flexible material for allowing bending thereof. Therefore, as shown in Fig. 8, if the respective inner ends 1001b and 1002b of the first and second key regions 1001 and 1002 are pressed down, the center portion of the key array 1000 is curved in a concave shape. In this state, there is effectively little or no bending at the respective outer ends 1001 a and 1002a of the first and second key regions 1001 and 1002.

If the respective inner ends 1001 band 1002b of the first and second key regions 1001 and 1002 are curved, the first and second key regions 1001 and 1002 come into contact with the dome switch 202 provided thereunder, thereby causing the contact 201 of the dome switch 202 to come into electrical contact with the contact 51 of the printed circuit board 50, respectively.

As shown in Fig. 9, where the respective outer ends 1001a and 1002a of the first and second key regions 1001 and 1002 are pressed down, they are curved in a convex shape. In this state, there is effectively little or no bending at the respective inner ends 1001b and 1002b of the first and second key regions 1001 and 1002.

As apparent from the above description, the present invention provides a key input device for a portable communication terminal, which comprises eight key arrays 100 arranged in a 2x4 array, instead of the existing conventional twelve keys in a 3x4 array. As the number of the keys is reduced, an external design of the portable communication terminal can be improved, and the whole size and weight thereof can be reduced.

Although the preferred embodiments of the present invention have been disclosed for illustrative purposes, those skilled in the art will appreciate that various modifications, additions and substitutions are possible, without departing from the scope and spirit of the invention as disclosed in the accompanying claims. Those of skill in the art will recognize that the key input device of the present invention is applicable to all kinds of portable communication terminals.

## Claims

1. A key input device for a portable communication terminal comprising:
a printed circuit board (50);
a plurality of dome switches (201) mounted on the printed circuit board (50), and
a plurality of linear key arrays (100,1000) positioned over the dome switches (201), each key array having first and second key regions (101,1001,102,1002) connected to each other at a boundary portion (103,1003) and each having outer ends (101a,1001a,102a,1002a) opposite the boundary portion, wherein a dome switch (201) is located under the boundary portion (103,1003) and each of the first and second key regions (101,1001,102,1002).

2. The key input device according to claim 1, wherein a dome switch plate (200) comprising said plurality of dome switches (201) is mounted on the printed circuit board (50).

3. The key input device according to claim 1 or 2, wherein said dome switch (201) assigned to first and second key regions is located under each outer end (101 a, 1001a, 102a, 1002a) of the corresponding linear key array.

4. The key input device according to one of the previous claims, wherein one or more protrusions (104) are formed between a lower surface of the respective key arrays (100, 1000) and the dome switch plate (200) and between adjacent ones of the dome switches (201), thereby causing the first and second key regions (101, 102) to be biased upwardly or downwardly in a seesaw manner about a protrusion (104) when the respective ends (101a,101b,102a,102b) of the first and second key regions are pressed down by an external force.

5. The key input device according to one of the previous claims, wherein the boundary portion (103) of the first and second key regions (101,102) is formed by a groove (300) having a pre-determined depth.

6. The key input device according to one of the previous claims, wherein the key arrays (100,1000) are arranged such that their first and second key regions are arranged in a 2x4 array along a longitudinal direction of a body (10) of said portable communication terminal.

7. The key input device according to one of the previous claims, wherein rectilinear support frames (400) are respectively positioned between the key arrays (100,1000) to separate same from one another.

8. The key input device according to one of the previous claims, wherein at least one of the respective key arrays (100,1000) is provided thereon with a printed surface (105), which is printed with various numerals and letters, for identification of functions of the respective key arrays, at positions corresponding to the boundary portion (103, 1003), and the outer end (101a, 1001a, 102a, 1002a) of the respective first and second key regions (101,1001,102,1002).

9. The key input device according to one of the previous claims, wherein the key arrays (100) are made of a hard material.

10. The key input device according to one of the previous claims, wherein the first and second key regions (101,102,1001,1002) are integrally connected to each other at the boundary portion (103,2003).

11. The key input device according to one of the previous claims, wherein the first and second key regions (1001,1002) are curved when their respective outer and inner ends (1001a,1002a,1001b,1002b) are pressed down, the respective outer ends (1001a,1002a) of the first and second key regions being mounted near an outer rim of said body (10).

12. The key input device according to claim 11, wherein the key arrays (1000) are made of a soft material.

13. A key input device for a portable communication terminal having a printed circuit board (50) and a dome switch plate (200) having a plurality of dome switches (201) mounted on the printed circuit board (50), comprising:
a plurality of linear key arrays (100,1000) positioned over the dome switches (201), each linear key array having first and second key regions (101,1001,102,1002) connected at a central boundary portion (103,1003), wherein the ratio of first and second key regions to dome switches is 2:3.
